# EUROPÄISCHE PATENTSCHRIFT

(11) **EP 1 303 740 B1**
(45) Veröffentlichungstag und Bekanntmachung des Hinweises auf die Patenterteilung: **11.05.2016**
(21) Anmeldenummer: 01953894.1
(22) Anmeldetag: 09.07.2001
(51) Int. Cl.: G01C 21/00, G08G 1/0962

(54) **VERFAHREN ZUR VERKNÜPFUNG GEOGRAPHISCHER UND KOMMERZIELLER DATEN SOWIE DEREN BEREITSTELLUNG**
METHOD FOR LINKING GEOGRAPHICAL AND COMMERCIAL DATA AND PROVIDING THE SAME
PROCEDE DE LIAISON DE DONNEES GEOGRAPHIQUES ET COMMERCIALES ET LEUR MISE A DISPOSITION

(30) Priorität: 13.07.2000 DE 10034109
(43) Veröffentlichungstag der Anmeldung: 23.04.2003
(73) Patentinhaber: Müller, Jürgen W., 64287 Darmstadt (DE)
(72) Erfinder: Müller, Jürgen W., 64287 Darmstadt (DE)
(74) Vertreter: 2K Patentanwälte Blasberg Kewitz & Reichel
(86) Internationale Anmeldenummer: PCT/DE2001/002556
(87) Internationale Veröffentlichungsnummer: WO 2002/006771

(56) Entgegenhaltungen:
- EP-A- 1 081 462
- WO-A-98/59215
- WO-A-99/60338
- DE-C- 19 743 705
- US-A- 5 677 837
- US-A- 6 018 695
- PATENT ABSTRACTS OF JAPAN vol. 1999, no. 08, 30. Juni 1999 (1999-06-30) & JP 11 085770 A (FUJITSU F I P KK), 30. März 1999 (1999-03-30)

## Beschreibung

Die Erfindung betrifft ein Verfahren zur positionsgenauen Bestimmung geographischer Messpunkte und die Verknüpfung der Daten der Messpunkte mit weiteren Daten sowie die Bereitstellung dieser so verknüpften Daten in elektronischer Form.

Ähnliche Verfahren sind aus dem Stand der Technik bereits bekannt. So beschreibt beispielsweise die WO 98/59215 ein persönliches Kommunikationsgerät, welches einen GPS (Global Positioning System) -Empfänger und eine Anzeige enthält. Ein Benutzer kann mit diesem Gerät von einem Datenanbieter eine gewünschte Landkarte sowie weitere Daten, welche einem bestimmten Ort zugeordnet sind, anfordern und erhält diese am Gerät angezeigt.

Aus der WO 94/27268 ist ein tragbares Informationssystem bekannt, welches audiovisuelle Daten von einer Datenbank empfängt. Dieses System kann auf einer Reise bestimmte Plätze, welche für den Benutzer von besonderem Interesse sind, automatisch identifizieren und beschreiben. Dies sind zum Beispiel Landmarken, die Geschichte umliegender Gebäude, die Ortsangabe von Hotels, Krankenhäusern, Geschäften sowie Produkte innerhalb eines bestimmen Radius der jeweiligen Position des Benutzers. Die Bedienung dieses Systems erfolgt mittels Bedienmenüs oder mittels Sprachsteuerung.

Aus einer weiteren Schrift DE 44 37 360 A1 ist ein Reiseführer mit ortsgesteuerter Informationsausgabe bekannt. Dieses Gerät ist insbesondere für die Benutzung eines GPS gesteuerten Autopilotsystems in Kraftfahrzeugen in Kombination mit der Ausgabe touristischer Informationen vorgesehen, welche auf CD ROM gespeichert sind. Eine derartige Datenausgabe ermöglicht einen schnellen Zugriff auf die gewünschten Informationen, welche auch akustisch ausgegeben werden. Es wird ferner ein tragbares Gerät vorgeschlagen, welches nicht an das Kraftfahrzeug gebunden ist.

Die WO-A-99 60338 bzw. das Familiendokument EP-A-1 081 462 beschreibt ein Fußgängernavigationssystem, welches auch im Inneren von Gebäuden funktioniert, da es von an bestimmten Stellen angebrachten Markierungen Positionshinweise erhält.

Aus den Patentschriften WO-A-98 59215, US-A-5 677 837, JP-A-11 085 770 und US-A-6 018 695 sind weitere Navigationssysteme oder navigationsbezogene Datenbanken bekannt.

Verfahren und Vorrichtungen der vorbeschriebenen Art unterliegen einer rasanten Entwicklung in der modernen Kommunilcationsgesellschaft. Die aktuelle Standortbestimmung stationärer und mobiler Objekte gewinnt ständig an Bedeutung, sowohl in den privaten Bereichen als auch in der kommerziellen Nutzung. So ist eine grobe Standortbestimmung, beziehungsweise die Navigation auf Langstrecken, mit den bislang bekannten Verfahren und Geräten relativ problemlos möglich, während die genaue Lagebestimmung insbesondere in städtischen Gebieten bislang nicht befriedigend gelöst ist. Hinzu kommt die Schwierigkeit beispielsweise in Straßenschluchten die notwendigen GPS Informationen zu empfangen um so seine Position oder auch sein Ziel zweifelsfrei bestimmen zu können.

Aufgabe der vorliegenden Erfindung ist es daher, ein verbessertes Verfahren zur positionsgenauen Bestimmung geographischer Ortsdaten vorzuschlagen sowie die Verknüpfung dieser Daten mit weiteren, beispielsweise kommerziellen, Informationen in elektronischer Form anzugeben. Damit soll einerseits der Zielort für einen Benutzer zweifelsfrei identifizierbar sein, sodass ein umständliches und zeitraubendes Suchen von exakten Positionen beispielsweise an Gebäuden, Grundstückseinfahrten, Parkplätzen, freiliegenden Objekten und an nicht sofort ersichtlichen Eingängen oder nur mühsam auffindbaren Lokalitäten vermieden wird. Andererseits sollen die geographischen Daten mit weiteren Informationen verknüpft werden, so dass ein Nutzer eine schnelle Information von Produkt- oder Dienstleistungs-Angeboten zu der jeweiligen lokalen Position erhält.

Die Lösung dieser Aufgabe erfolgt bei einem Verfahren der vorbeschriebenen Art mit den im unabhängigen Anspruch 1 angegebenen Merkmalen. Vorteilhafte Ausgestaltungen sind in den abhängigen Ansprüchen angegeben.

Erfindungsgemäß werden nun die folgenden Verfahrensschritte durchgeführt. Zunächst werden von einem Dienstleistungsanbieter die geographischen Messpunkte der an dem Verfahren teilnehmenden Lieferanten, das heißt die Messpunkte der Gebäude, Grundstücke, Objekte, etc. der Verfahrensteilnehmer punktgenau bestimmt und anschließend mittels eines Navigations- und/oder Messsystems zu den Messpunkten korrespondierende geographische Koordinaten ermittelt. In einem nächsten Schritt wird jedem Messpunkt entweder eine reale Markierung, beispielsweise in Form eines Siegels vor Ort, oder auch eine virtuelle Markierung, beispielsweise die geographischen Koordinaten in Form elektronischer Daten, zugeordnet. Anschließend erfolgt die Einspeicherung sowohl der konventionellen, bisher gebräuchlichen Adressdaten dieser Messpunkte, falls vorhanden, und der korrespondierenden Koordinaten in eine Datenbank. Außerdem erfolgt die Einspeicherung weiterer insbesondere kommerzieller Daten, beispielsweise Produkt- und/oder Dienstleistungs-Informationen, in diese Datenbank sowie deren Verknüpfung mit den bereits eingespeicherten korrespondierenden Daten der Messpunkte. Diese so verknüpften Daten der geographischen Messpunkte und der Produkt- und/oder Dienstleistungs-Informationen werden nun von dem Dienstleistungsanbieter zur Nutzung durch einen Kunden bereitgestellt, wobei dieser mittels eines Sende- und Empfangsgerätes mit der Datenbank kommuniziert. Mit dem vorgeschlagenen Verfahren wird ein Benutzer positionsgenau zu dem gewünschten Ort geleitet, welchen er durch die vorab angebrachte Markierung nun zweifelsfrei identifizieren kann. Dadurch wird vorteilhafterweise ein umständliches und zeitraubendes Suchen und Finden von exakten Positionen, beispielsweise von Gebäuden, Grundstücken, Parkplätzen oder ähnlichen vermieden. Außerdem erhält ein Benutzer eine schnelle Information von Produkt- und Dienstleistungs-Angeboten verknüpft mit der lokalen Position des jeweiligen Messpunkts.

Durch die Erfindung wird das Prinzip "leichtes Suchen und exaktes Finden" im lokalen Bereich schnell, bequem und zuverlässig bereitgestellt, die Orientierung wird vereinfacht, Örtlichkeiten und Informationen werden transparent gemacht und die Sicherheit im persönlichen und kommerziellen Bereich verbessert. Die bisherige Suche einer lokalen Adresse über Straße und Hausnummer findet nicht mehr statt. Auch die bislang oft unzulängliche Navigation mittels der durch GPS bereitgestellten Daten wird verbessert. Mit der definierten und direkten Zuordnung der Markierungen zu den interessierenden Messpunkten, beispielsweise zu einer Immobilie, einem freiliegenden Grundstück oder ähnlichem, erleichtern diese ein zielgenaues Auffinden dieser Position in der Realität. Die Umsetzung des erfindungsgemäßen Verfahrens ist somit äußerst vielseitig und bietet wesentliche Vorteile in der Identifizierung geographischer Messpunkte durch die Markierungen sowie Zeit-, Kosten- und Weg-Einsparungen durch deren Verknüpfung mit weiteren Informationen. Das vorgeschlagene Verfahren geht mit seinen angebotenen Produkten und Leistungen gezielt auf die individuellen Bedürfnisse eines Benutzers ein. Es ist somit in vorteilhafter Weise eine Navigationshilfe, ein Marketing-, Rettungs- und Kontrollinstrument, ein virtuelles Planungswerkzeug und es kann auch als Qualitätsmarke mit der Integration der Markierung in die Corporate Identity eines Unternehmens genutzt werden.

In einer vorteilhaften Weiterbildung der Erfindung wird vorgeschlagen, dass die geographischen Messpunkte insbesondere im Bereich von Eingängen, Türen, Toren, Zufahrten, exponierten Positionen oder ähnlichen von Gebäuden oder Grundstücken vorgesehen sind. Somit wird eine punktgenaue Bestimmung der Ortsangaben ermöglicht, welche einem Nutzer beispielsweise vor dem Eingang eines Gebäudes oder Grundstücks durch das dort von einem Dienstleistungsanbieter angebrachte Siegel angezeigt wird. Es ist somit auch möglich, dass beispielsweise ein Lieferant sicher das richtige Tor beziehungsweise die richtige Zufahrt zu einem Gebäude oder Grundstück erreicht, selbst wenn das Gebäude oder das Grundstück mehrere Zufahrten aufweist, welche bislang oft die gleiche Adresse, beziehungsweise die gleiche Postanschrift haben. Exponierte Positionen sind beispielsweise Sendemastenspitzen oder Dachlcanten und -ecken von Hochhäusern oder ähnliche.

In einer weiteren Ausbildung der Erfindung wird vorgeschlagen, dass die Position eines geographischen Messpunkts von dem Dienstleistungsanbieter vor Ort mittels eines Satelliten-Navigationssystems, beispielsweise GPS, DGPS (Differential Global Positioning System), GLONASS/GNSS (Global Navigation Satellite System) oder eines ähnlichen Verfahrens, mittels eines Funlcpeilungs- oder eines Zellenmesssystems ausgemessen wird und dass anschließend dem vorbestimmten Messpunkt die entsprechenden geographischen Koordinaten zugeordnet werden. Damit ist in vorteilhafter Weise jeder beliebige, insbesondere mit einem Siegel markierte, geographische Messpunkt durch seine geographischen Koordinaten identifizierbar und durch Eingabe dieser Daten in eine Datenbank mit weiteren Daten kombinierbar.

Alternativ zur vorgenannten Messmethode, welche durch eine Messung vor Ort erfolgt, kann die Position eines Messpunkts auch berechnet werden, falls der Messpunkt schwer zugänglich oder nicht erreichbar ist. Vorteilhafter Weise liegt dann eine virtuelle Markierung in elektronischer Form, beispielsweise durch die Koordinatendaten des Messpunktes vor, welche anschließend in der Datenbank entsprechend eingespeichert und weiterverarbeitet werden können. Mit den heutigen hochpräzisen Echtzeit-Positionier-Systemen sind technische Genauigkeiten von 1 bis 5 cm darstellbar, welche zukünftig mittels GPPS (Geodätischer Präzisions Positionierungs-Service) und GHPS (Geodätischer Hochpräzisions Positionierungs-Service) 1cm und darunter erreichen können. Somit ist eine exakte Wiederauffindung der einmal bestimmten und markierten Messpunkte gewährleistet.

Erfindungsgemäß können mittels mehrerer Messpunkte sowohl Linien als auch Flächen oder sogar Räume dargestellt werden, welche vorteilhafterweise zur Auffindung größerer Gebäude, Grundstücke, Wälder, Schutzgebiete, Naturparks oder ähnlicher Ziele dienen, welche keinen punktgenauen Zugang aufweisen. Wenn möglich, werden zu den Koordinaten jedes Messpunkts in der Datenbank auch die korrespondierenden konventionellen Adressdaten, wie beispielsweise Name, Straße und Hausnummer, Ort, Land gespeichert. Diese kann der Nutzer als zusätzliche Information über seinen Standort oder sein Ziel anfordern.

In einer vorteilhaften Weiterbildung der Erfindung wird vorgeschlagen, dass zu jedem Messpunkt eine neuartige elektronische Adresse generierbar ist, welche beispielsweise aus wenigstens einem Teil der Adressdaten und/oder den Koordinaten des Messpunkts besteht. Zusätzlich oder auch alternativ kann aus den Messpunlctdaten ein Barcode erstellt werden, der zukünftigen Navigationsgeräten mit Barcode-Einlesefunktion das Abspeichern und das Zuordnen der entsprechenden Zieladresse, eines Eingangs oder einer Zufahrt ermöglicht. Alternativ kann auch eine elektronische Adresse an mobile Geräte, wie beispielsweise Navigationsgeräte im Automobil oder an ein Mobiltelefon (Handy) gekoppelt werden. Somit sind auch bewegliche Objekte, Personen oder Tiere wieder auffindbar. Die elektronische Adresse kann als integrativer Bestandteil die bisherige Adresse mit Straße und Hausnummer, Ort, Land ergänzen oder auf längere Sicht vollständig ersetzen.

Die vorbeschriebene elektronische Adresse kann beispielsweise auch in ein Navigationsgerät eines Automobils eingegeben werden. Diese lotst sodann den Fahrer direkt und problemlos zu dem von ihm gewünschten Ort. Die mit einem erfindungsgemäßen Siegel gekennzeichnete Örtlichkeit weist den Besucher auf die gesuchte Ein- oder Ausfahrt hin. Ein bislang häufig auftretendes Problem, dass beispielsweise die Hausnummer eines Zielgebäudes für einen Autofahrer optisch schwer erkennbar ist, entfällt somit. Durch das erfindungsgemäße Verfahren wird ein zielgerichtetes Fahren unterstützt. Ein schnelles und bequemes Auffinden, beispielsweise von für Besucher und Gäste bereitgestellte Parkplätze, ist somit auf einfache Weise möglich.

In einer besonders vorteilhaften Weiterbildung der Erfindung, welche auch eine eigenständige Erfindung darstellen kann, wird vorgeschlagen, dass die Daten der Messpunkte mit weiteren Produkt- und/oder Dienstleistungs-Informationen verknüpft werden. Diese sind beispielsweise touristische, logistische, meteorologische, verkehrstechnische, rettungstechnische, bergungstechnische, Veranstaltungs-, An-/Verkaufs-Informationen, elektronische Karten wie e-maps oder ähnliche. Somit ergibt sich eine Fülle von Kombinationsmöglichkeiten der geographischen Messpunlcte mit den jeweiligen Zusatzinformationen. Es wird auch vorgeschlagen, das erfindungsgemäße Verfahren als "Messeassistent" zu verwenden, welcher beispielsweise die Besucher über das Gelände einer Messe leiten und ihnen gewünschte Informationen oder alternative Zugänge zum Messegelände zeigen kann. Ein Besucher kann damit auch durch die Messestadt selbst geführt werden und sich den Weg zu bestimmten Standorten, Veranstaltungen oder ähnliches weisen lassen. Eine ähnliche Anwendung als "Assistent" ist beispielsweise auch für olympische Spiele, Weltmeisterschaften oder ähnliche Veranstaltungen möglich.

Weitere Anwendungen sind beispielsweise im öffentlichen Personennahverkehr durch eine individuelle Nutzung von Rufbussen denkbar, ebenso die Parkplatzsuche in städtischen Bereichen sowie auch das Wiederauffinden des eigenen Fahrzeugs auf großen Parkplätzen. Ein großes Feld der Anwendung ergibt sich außerdem auch im Fremdenverkehr, wobei Sehenswürdigkeiten, Hotels, Restaurants, Gaststätten oder ähnliches über das erfindungsgemäße Verfahren einfacher auffindbar sind.

In einer weiteren Anwendung des Verfahrens wird vorgeschlagen, dass als Produkt- oder Dienstleistungs-Informationen auch zeitlich kritische Produkte, Produkte mit Verfallsdatum, leicht verderbliche Produkte oder auch zeitlich kritische Dienstleistungen oder ähnliches angeboten werden. Diese können sowohl Lebensmittel, als auch "just in time" -Lieferungen jeglicher Art oder auch zeitlich gebundene Dienstleistungen sein.

Die Produkt- und/oder Dienstleistungs-Informationen werden von den Lieferanten oder auch den Dienstleistern des täglichen Bedarfs bereitgestellt. Dies sind beispielsweise Apotheken, Bäckereien, Cafes, Drogerien, Einzelhändler, Essstände, Fastfood Restaurants, Gaststätten, Großhändler, Hotels, Versorgungsunternehmen oder ähnliche, welche mit der Datenbank in Verbindung stehen und ihre Informationen dort unmittelbar eingeben.

Die in der Datenbank gespeicherten Daten der Messpunkte und insbesondere die Daten der Produkt- und/oder Dienstleistungs-Informationen werden von den Lieferanten oder Dienstleistern direkt oder auch von einem Datenbank-Bereitstellungsdienst ständig gepflegt, aktualisiert und erweitert. Dadurch wird gewährleistet, dass ein Kunde, welcher die Informationen nutzt, den letzten Stand der Informationen beziehungsweise die neuesten Informationen erhält.

In einer Weiterbildung wird vorgeschlagen, dass ein Kunde zur Nutzung der in der Datenbank gespeicherten Daten mittels eines stationären oder eines instationären Sende- und Empfanggerätes eine Verbindung mit dieser Datenbank herstellt. Als Sende- und Empfangsgerät kann ein Mobiltelefon (Handy), ein Handy mit Satellitennavigationsteil, eine Armbanduhr mit Satellitennavigationsteil, ein Kommunilcations- und Navigationsgerät in einem Kraftfahrzeug, ein PC, ein Notebook, ein Handheld-Computer, ein Palm-Top-Computer oder ähnliches elektronisches Kommunikationsgerät verwendet werden. Die Verbindung von einem derartigen Gerät zu der Datenbank erfolgt mittels Datenleitung per Festnetz, Funk, Mobilfunk, Internet oder ähnliches.

Die Kommunikation zwischen einem Kunden und der Datenbank erfolgt vorteilhafterweise durch Eingabe der Anforderungen und Wünsche des Kunden in das Sende- und Empfangsgerät. Die Eingabe erfolgt beispielsweise menü- oder auch sprachgesteuert. Anschließend empfängt der Kunde von der Datenbank auf seinem Empfangsgerät die von ihm gewünschten Koordinaten und/oder Adressdaten seines Ziels zusammen mit den korrespondierenden Produkt- und/oder Dienstleistungs-Informationen.

Zur einfachen und bequemen Kommunikation mit der Datenbank kann der Kunde nach seinen individuellen Bedürfnissen mittels des Sende- und Empfangsgerätes aus einer Anzahl vorgegebener Softwareprogramme (Rückfrage-Algorithmen) ein definiertes Programm auswählen oder auch mehrere definierte Programme zusammenstellen.

So kann beispielsweise mit einem definierten Softwareprogramm eine Kosten-, Weg-, Zeit-Optimierung durchgeführt werden, je nach Anforderung des Kunden ob dieser beispielsweise bei seinem Einkauf Kosten sparen will, einen möglichst kurzen Weg zwischen einzelnen Zielen zurücklegen, oder auch nur mit einer verbleibenden Restzeit die nächstgelegenen Ziele erreichen möchte.

Mittels eines definierten Softwareprogramms sind auch gewünschte Produkte bis zu einer vom Kunden vorgebbaren Preisobergrenze, beispielsweise "Schnäppchen", oder auch Produkte oberhalb einer vom Kunden definierbaren Preisuntergrenze ausgebbar. Somit kann der Kunde gezielt vorgeben, wenn er beispielsweise Sonderangebote angezeigt haben möchte.

So kann der Kunde auch angeben, wenn er mittels eines definierten Softwareprogramms in einem definierten Umkreis, welcher vorteilhafterweise von dem momentanen Standort des Kunden gewählt werden kann, alle angebotenen Produkt- und/oder Dienstleistungs-Informationen dargestellt haben möchte.

In einer weiteren Ausbildung der Erfindung wird vorgeschlagen, dass mittels eines definierten Softwareprogramms gewünschte Dienstleistungsinformationen nach Veranstaltungsart und Veranstaltungsort zusammengestellt werden. Hierunter sind beispielsweise Öffnungszeiten von Geschäften, Museen, Behörden, etc. sowie Konzerte, Kinoveranstaltungen oder ähnliche subsummiert.

Die von einem Kunden angeforderten Daten, wie beispielsweise die Adressdaten, die geographischen Koordinaten oder die Produkt- und Dienstleistungs-Informationen, welche von der Datenbank gesendet werden, können mittels des Empfangsgerätes visuell angezeigt und/oder auch akustisch ausgegeben werden. Der Kunde wird dies nach seinen individuellen Bedürfnissen entscheiden, je nach dem, ob er beispielsweise auf das Empfangsgerät schauen kann oder ob er beispielsweise beim Führen eines Kraftfahrzeugs die Informationen akustisch ausgegeben haben möchte.

Für eine visuelle Anzeige wird vorgeschlagen, dass der Kunde mittels Vektorführung auf einer vom Sende- und Empfangsgerät angezeigten elektronischen Karte, beispielsweise einer e-map, zu dem von ihm gewünschten und mit einer Markierung gekennzeichneten Ort hin- oder auch von diesem weggeführt wird. Der gesuchte Zielort ist dabei auf der elektronischen Karte mit einer Markierung, beispielsweise mit einem verkleinerten Abbild des Siegels, versehen. Dadurch wird ein einfaches Auffinden des Zieles erleichtert.

In einer weiteren Ausbildung wird vorgeschlagen, dass die von dem Kunden gewünschten Produkte und/oder Dienstleistungen bei einem Lieferant von dem Kunde selbst mittels des Sende- und Empfangsgerätes reservierbar sind. Somit können mit dem erfindungsgemäßen Verfahren sowohl Reservierungen für bestimmte Produkte als auch Hotelreservierungen, Kartenvorbestellungen für Theater, Kino oder ähnliche erledigt werden.

Es wird ferner vorgeschlagen, dass die Kunden beim Kauf eines reservierten Produktes oder auch einer Dienstleistung von dem am erfindungsgemäßen Verfahren beteiligten Lieferanten einen Rabatt erhalten. Somit ist vorteilhafterweise ein direkter Nutzen für den Kunden sowie auch ein Anreiz dafür geschaffen, dass der Kunde regelmäßig bei einem mit dem erfindungsgemäßen Verfahren verbundenen Lieferanten einkauft.

Durch eine Rückmeldung des Lieferanten über den Verkauf eines Produktes und/oder einer Dienstleistung an die Datenbank können vorteilhafterweise Verkaufsdaten zentral gesammelt und ausgewertet werden.

Weitere Ziele, Merkmale, Vorteile und Ausgestaltungen der Erfindung ergeben sich aus der nachfolgenden Beschreibung der Ausführungsbeispiele, die in den Figuren näher dargestellt sind.
- Figur 1: eine schematische Darstellung der wesentlichen Funktionen des erfindungsgemäßen Verfahrens,
- Figur 2: ein Siegel zur Markierung eines Messpunkts in der Draufsicht,
- Figur 3: den Grundriss eines Gebäudes mit einem Eingang in schematischer Darstellung und
- Figur 4: den Eingangsbereich gemäß Detail X in Figur 3 in vergrößerter Darstellung.

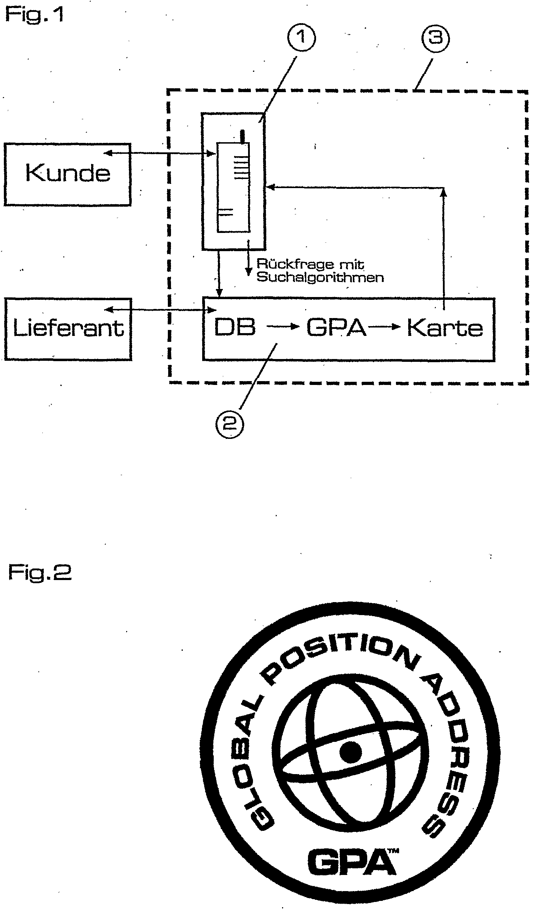

Ein Kunde (Fig. 1) fragt mittels des Sende- und Empfangsgerätes (1) die von einem Lieferant auf der Datenbank (2) bereitgestellten Informationen ab. Der Kunde erhält von der Datenbank (2) eine Karte mit einer elektronischen Adressdatei GPA ™ (Global Position Address) mit den individuellen Produkt- und Dienstleistungs-Informationen. Für die Abfrage nach bestimmten Softwareprogrammen wird von dem Sende- und Empfangsgerät (1) eine Rückfrage mit Suchalgorithmen an die Datenbank (2) geleitet, welche die gewünschten Daten dann anschließend über das Sende- und Empfangsgerät (1) an den Kunden ausgibt. Der erfindungsgemäße Verfahrensanteil ist durch die Systemgrenze (3) dargestellt. Dieser beinhaltet das Sende- und Empfangsgerät (1) und die Datenbank (2) und wird von einem Dienstleistungsanbieter bereitgestellt.

Ein geographischer Messpunkt kann beispielsweise mit einer realen Markierung, wie einem Siegel (Fig. 2) markiert werden. Eine derartige Siegelmarke enthält beispielsweise ein GPA™-Logo.

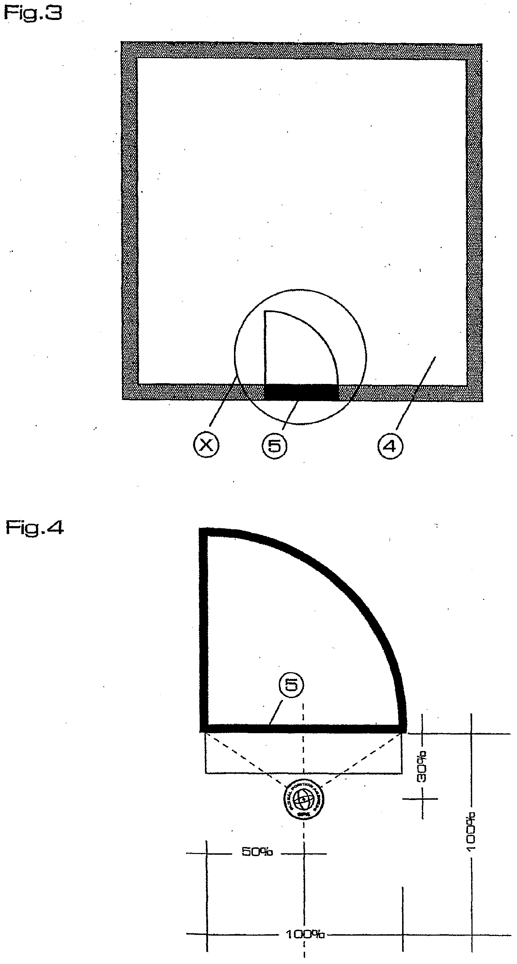

Zur Bestimmung eines Messpunkts (Fig. 3, Fig. 4) wird die Breite eines Eingangs (5), einer Tür, eines Tores, einer Zufahrt oder ähnliches an einem Gebäude (4) ermittelt. Der Messpunkt wird in der Mitte der Breite und in einem senkrechten Abstand von vorzugsweise 30-100 % der Breite vor dem Eingang (5) festgelegt. Somit ist der mit einem Siegel markierte Eingang (5) eines Gebäudes (4) oder eines Grundstücks durch einen Kunden zweifelsfrei identifizierbar. Falls der Messpunkt nicht auf dem Boden vor einem Eingang (5) oder einer Einfahrt angebracht werden kann, so ist auch eine Befestigung eines Siegels an der Wand eines Gebäudes unmittelbar neben dem Eingang oder der Zufahrt möglich. Dieses Siegel wird ergänzt durch eine Markierung mit Angabe der Koordinaten für den tatsächlichen Messpunkts.

## Patentansprüche

1. Verfahren zur positionsgenauen Bestimmung geographischer Messpunkte und die Verknüpfung der Daten der Messpunkte mit weiteren Daten und die Bereitstellung dieser so verknüpften Daten in elektronischer Form mit den folgenden Verfahrensschritten:
- Bestimmung der geographischen Messpunkte und Ermittlung der korrespondierenden geographischen Koordinaten dieser Messpunkte mittels eines Navigations- und/oder Messsystems (1),
- Einspeichern der Adressdaten der Messpunkte und der korrespondierenden Koordinaten in eine Datenbank (2),
- Einspeichern weiterer Daten, wie beispielsweise Produkt- und/oder Dienstleistungs-Informationen in die Datenbank und Verknüpfung dieser Daten mit den korrespondierenden Daten der Messpunkte und
- Bereitstellen der so verknüpften Daten zur Nutzung durch Kunden, wobei diese mittels eines Sende- und Empfangsgerätes mit der Datenbank kommunizieren,
**dadurch gekennzeichnet, dass** jedem Messpunkt eine reale und virtuelle Markierung zugeordnet wird, wobei die reale Markierung durch das Anbringen eines Siegels vor Ort und die virtuelle Markierung durch eine elektronische Dateninformation in der Datenbank erfolgt.

2. Verfahren nach Anspruch 1, **dadurch gekennzeichnet, dass** die Messpunkte im Bereich von Eingängen, Türen, Toren, Zufahrten, exponierte Positionen von Gebäuden oder Grundstücken vorgesehen sind.

3. Verfahren nach Anspruch 2, **dadurch gekennzeichnet, dass** die Position eines Messpunkts vor Ort mittels eines Satelliten-Navigationssystems, bspw. GPS, DGPS, GLONASS, eines Funkpeilungs- oder eines Zellenmesssystems ausgemessen wird und diesem Messpunkt die geographischen Koordinaten zugeordnet werden.

4. Verfahren nach Anspruch 2, **dadurch gekennzeichnet, dass** die Position eines Messpunkts berechnet wird.

5. Verfahren nach einem der vorhergehenden Ansprüche, **dadurch gekennzeichnet, dass** mittels mehrerer Messpunkte Linien, Flächen oder Räume darstellbar sind.

6. Verfahren nach einem der vorhergehenden Ansprüche, **dadurch gekennzeichnet, dass** die Adressdaten, beispielsweise Name, Straße und Hausnummer, Ort, Land und die korrespondierenden Koordinaten jedes Messpunkts in der Datenbank abgespeichert werden.

7. Verfahren nach einem der vorhergehenden Ansprüche, **dadurch gekennzeichnet, dass** zu jedem Messpunkt eine elektronische Adresse generierbar ist, welche beispielsweise aus einem Teil der Adressdaten und den Koordinaten des Messpunkts besteht.

8. Verfahren nach einem der vorhergehenden Ansprüche, **dadurch gekennzeichnet, dass** als Produkt- und/oder Dienstleistungs-Informationen beispielsweise touristische, logistische, meteorologische, verkehrstechnische, rettungstechnische, bergungstechnische, Veranstaltungs-, An-Verkaufs-Informationen, elektronische Karten wie e-maps vorgesehen sind.

9. Verfahren nach einem der vorhergehenden Ansprüche, **dadurch gekennzeichnet, dass** als Produkt- und/oder Dienstleistungs-Informationen zeitlich kritische Produkte, Produkte mit Verfallsdatum, leicht verderbliche Produkte oder zeitlich kritische Dienstleistungen vorgesehen sind.

10. Verfahren nach Anspruch 8 oder 9, **dadurch gekennzeichnet, dass** die Produkt- und/oder Dienstleistungs-Informationen von Lieferanten oder Dienstleistern des täglichen Bedarfs, beispielsweise Apotheken, Bäckereien, Cafes, Drogerien, Einzelhändlern, Essständen, Fastfood-Restaurants, Gaststätten, Großhändlern, Hotels, Restaurants, Versorgungsunternehmen bereitgestellt werden.

11. Verfahren nach einem der vorhergehenden Ansprüche, **dadurch gekennzeichnet, dass** die in der Datenbank gespeicherten Daten der Messpunkte und der Produkt-und/oder Dienstleistungs-Informationen von den Lieferanten direkt oder einem Datenbank-Bereitstellungsdienst ständig gepflegt und aktualisiert werden.

12. Verfahren nach einem der vorhergehenden Ansprüche, **dadurch gekennzeichnet, dass** ein Kunde zur Nutzung der in der Datenbank gespeicherten Daten mittels eines stationären und/oder instationären Sende- und Empfangsgerätes, beispielsweise eines Mobiltelefons (Handy), Handy mit Satellitennavigationsteil, Armbanduhr mit Satellitennavigationsteil, Kommunikations- und Navigationsgerät in einem Kraftfahrzeug, PC, Notebook, ein Handheld-Computer oder ein Palm-Top-Computer als elektronisches Kommunikationsgerät, eine Verbindung mittels Datenleitung per Festnetz, Funk, Mobilfunk oder Internet mit dieser Datenbank herstellt.

13. Verfahren nach Anspruch 12, **dadurch gekennzeichnet, dass** der Kunde seine Anforderungen und/ oder Wünsche mittels des Sende- und Empfangsgerätes an die Datenbank sendet und der Kunde von der Datenbank die gewünschten Produkt-und/oder Dienstleistungs-Informationen zusammen mit den korrespondierenden Koordinaten und/oder Adressdaten empfängt.

14. Verfahren nach Anspruch 13, **dadurch gekennzeichnet, dass** vom Kunden nach seinen individuellen Bedürfnissen mittels des Sende- und Empfangsgerätes aus einer Anzahl vorgegebener Software-Programme wenigstens ein definiertes Software-Programm auswählbar ist.

15. Verfahren nach Anspruch 14, **dadurch gekennzeichnet, dass** ein definiertes Software-Programm eine Kosten-, Weg-, Zeit-Optimierung durchführt.

16. Verfahren nach Anspruch 14, **dadurch gekennzeichnet, dass** mittels eines definierten Software-Programms gewünschte Produkte bis zu einer vom Kunden definierbaren Preisobergrenze, beispielsweise Schnäppchen, oder oberhalb einer vom Kunden definierbaren Preisuntergrenze ausgebbar sind.

17. Verfahren nach Anspruch 14, **dadurch gekennzeichnet, dass** mittels eines definierten Software-Programms in einem definierten Umkreis, beispielsweise vom momentanen Standort des Kunden, die gewünschten Produkt- und/oder Dienstleistungs-Informationen darstellbar sind.

18. Verfahren nach Anspruch 14, **dadurch gekennzeichnet, dass** mittels eines definierten Software-Programms die gewünschten Produkte und/oder Dienstleistungen, deren Preise herabgesetzt wurden, angebbar sind.

19. Verfahren nach Anspruch 14, **dadurch gekennzeichnet, dass** mittels eines definierten Software-Programms gewünschte Dienstleistungs-Informationen nach Veranstaltungsart und Veranstaltungsort zusammenstellbar sind.

20. Verfahren nach einem der vorhergehenden Ansprüche, **dadurch gekennzeichnet, dass** die von dem Kunden angeforderten Daten, wie beispielsweise die Adressdaten und/oder die geographischen Koordinaten und/oder die gewünschten Produkt- und/oder Dienstleistungs-Informationen und/oder eine elektronische Karte, von der Datenbank gesendet und mittels des Empfangsgerätes visuell angezeigt und/oder akustisch ausgegeben werden.

21. Verfahren nach Anspruch 20, **dadurch gekennzeichnet, dass** der Kunde mittels Vektorführung auf einer auf dem Sende-und Empfangsgerät angezeigten elektronischen Karte, beispielsweise einer e-map, zu dem von ihm gewünschten und mit einer Markierung gekennzeichneten Ort hin- oder von diesem weg führbar ist.

22. Verfahren nach Anspruch 21, **dadurch gekennzeichnet, dass** der gewünschte Ort auf der e-map mit einer Markierung, beispielsweise einem verkleinerten Abbild des Siegels, versehen ist.

23. Verfahren nach Anspruch 20, **dadurch gekennzeichnet, dass** der Kunde mittels akustischer Informationen durch das Sende- und Empfangsgerät zu dem von ihm gewünschten und mit einer Markierung, beispielsweise einem Siegel, gekennzeichneten Ort hin- oder von diesem wegführbar ist.

24. Verfahren nach einem der vorhergehenden Ansprüche, **dadurch gekennzeichnet, dass** die gewünschten Produkte und/oder Dienstleistungen bei einem Lieferant von dem Kunden mittels des Sende- und Empfangsgerätes reservierbar sind.

25. Verfahren nach Anspruch 24, **dadurch gekennzeichnet, dass** der Kunde beim Kauf eines reservierten Produkts oder einer Dienstleistung von dem Lieferanten einen Rabatt erhalt.

26. Verfahren nach Anspruch 24 oder 25, **dadurch gekennzeichnet, dass** der Lieferant eine Rückmeldung Über den Verkauf eines Produktes oder einer Dienstleistung an die Datenbank sendet.

## Claims

1. Method for accurately determining the location of geographic measuring points and linking the data of these measuring points with further data and providing this data thus linked in electronic form, **characterized by** the following method steps:
- Designating of the geographic measuring points and determining of the corresponding geographical coordinates of these measuring points using a navigation and/or measuring system (1),
- Storing of the measuring points' address data and the corresponding geographic coordinates in a database (2),
- Storing of further data, such as for example product and/or service information in the database and linkage of this data with the corresponding data of the measuring points and
- Making the data thus linked available for use by customers, whereby these communicate with the database using a transmitting and receiving device,
**characterized in that** each measuring point is assigned to a real and a virtual marking, wherein the real marking is made by installing a seal on site and a virtual marking is performed by an electronic data information in the data base.

2. The Method according to claim 1, **characterized in that** the measuring points are attached close to entrances, doors, gates, access roads, exposed positions or similar of buildings or properties.

3. The method according to claim 2, **characterized in that** the position of a measuring point is measured on site using a satellite navigation system, such as for example GPS, DGPS, GLONASS, a radiobearing or cell measuring system and the geographic coordinates are assigned to this measuring point.

4. The method according to claim 2, **characterized in that** the position of a measuring point is determined by calculation.

5. The method according to one of the preceding claims, **characterized in that** several measuring points can be used to depict lines, surfaces or spaces.

6. The method according to one of the preceding claims, **characterized in that** the address data, for example name, street address, city, country and the corresponding coordinates of each measuring point are stored in the database.

7. The method according to one of the preceding claims, **characterized in that** an electronic address can be generated for each measuring point, which, for example, consists of a part of the address data and the coordinates of the measuring point.

8. The method according to one of the preceding claims, **characterized in that** product and/or service information are intended to be for example tourist, logistical, meteorological, traffic-related, rescue-related, salvage-related, event information, purchasing and selling information and electronic maps such as e-maps or similar.

9. The method according to one of the preceding claims, **characterized in that** as product and/or service information products critical in time, products with expiry date, easily perishable products or services critical in time or similar are intended.

10. The method according to claim 8 or 9, **characterized in that** the product and/or service information is supplied by suppliers or service providers for everyday needs, such as for example pharmacies, bakeries, cafes, drugstores, retail traders, food stands, fast food restaurants, inns, wholesale traders, hotels, restaurants, supply companies or similar.

11. The method according to one of the preceding claims, **characterized in that** the data stored in the database comprising measuring points and/or product and/or service information are permanently maintained and updated by the suppliers them self or by a database service provider.

12. The method according to one of the preceding claims, **characterized in that** in order to use the data stored in the database, the customer uses a stationary and/or instationary transmitting and receiving device, for example a cellular phone, a cellular phone with satellite navigation equipment, a wristwatch with satellite navigation equipment, a communication and navigation device in a motor vehicle, a PC, a notebook, a handheld computer, a palm-top computer or similar electronic communication device for establishing a connection to this database via conventional telephone network, radio, cellular phone network, internet or similar.

13. The method according to claim 12, **characterized in that** the customer sends his requirements and/or wishes to the database using the transmitting and receiving device and the customer receives the desired product and/or service information from the database together with the corresponding coordinates and/or address data.

14. The method according to claim 13, **characterized in that**, depending on his individual requirements, the customer can select at least one defined software program from a number of predefined software programs using the transmitting and receiving device.

15. The method according to claim 14, **characterized in that** a defined software program carries out a cost, route and time optimization.

16. The method according to claim 14, **characterized in that** a defined software program can provide desired products below an upper price level specified by the customer, for example bargains, or products above a lower price level specified by the customer.

17. The method according to claim 14, **characterized in that** a defined software program can be used to provide the desired product and/or service information available within a defined radius, for example from the customer's current location.

18. The method according to claim 14, **characterized in that** the desired products and/or services whose prices have been lowered can be provided using a defined software program.

19. The method according to claim 14, **characterized in that** the desired service information can be compiled according to event type and event venue using a defined software program.

20. The method according to the preceding claim, **characterized in that** the data requested by the customer, such as for example the address data and/or the geographic coordinates and/or the desired product and/or service information and/or an electronic map is sent by the database and visually displayed and/or given out acoustically by the transmitting and receiving device.

21. The method according to claim 20, **characterized in that** the customer is guided to or from the desired, marked location using vector guidance on an electronic map, for example an e-map, that is displayed on the transmitting and receiving device.

22. The method according to claim 21, **characterized in that** the desired location is indicated on the e-map by a marker, for example a miniaturized image of the seal.

23. The method according to claim 20, **characterized in that** the customer can be guided to or from the desired location that is marked, for example with a seal, using acoustic information from the transmitting and receiving device.

24. The method according the preceding claim, **characterized in that** the desired products and/or services can be reserved from a supplier by the customer using the transmitting and receiving device.

25. The method according to claim 24, **characterized in that** the customer receives a discount from the supplier when purchasing a reserved product or service.

26. The method according to claim 24 or 25, **characterized in that** the supplier sends feedback on the sale of a product or service to the database.'

## Revendications

1. Un procédé de détermination précise de la position de points de mesure géographiques et de mise en relation des données de ces points de mesure avec des données supplémentaires et la fourniture de ces données ainsi liées sous forme électronique, **caractérisé par** les étapes de procédé suivantes:
- désignation des points de mesure géographiques et détermination des coordonnées géographiques correspondantes de ces points de mesure en utilisant une navigation et/ou un système de mesure (1),
- le stockage des données d'adresse des points de mesure et des coordonnées géographiques correspondante au sein d'une base de données (2) ;
- le stockage des données supplémentaires, par exemple des informations relatives à des produits et/ou services au sein de la base de données et le lien de ces données avec les données correspondantes des points de mesure et
- la mise à disponibilité des données ainsi liées pour une utilisation par des clients, par lequel ceux-ci communiquent avec la base de données en utilisant un dispositif de transmission et de réception,
**caractérisé en ce que** chaque point de mesure est affecté à un marquage virtuel et réel, dans lequel le marquage réel est effectué par l'installation d'un sceau sur le site et le marquage virtuel est réalisé par une information électronique au sein de la base de données.

2. Le procédé de la revendication 1, **caractérisé en ce que** les points de mesure sont à proximité des entrées, portes, portails, allées, et les positions exposées ou similaires des bâtiments ou propriétés.

3. Le procédé selon la revendication 2, **caractérisé en ce que** la position d'un point de mesure est mesuré sur site au moyen d'un système de navigation satellite, tel que par exemple GPS, DGPS, GLONASS, OA, un repérage radio ou un système de mesure de cellule et les coordonnées géographiques sont affectées à ce point de mesure.

4. Le procédé selon la revendication 2, **caractérisé en ce que** la position d'un point de mesure est déterminée par calcul.

5. Le procédé selon l'une quelconque des revendications précédentes, **caractérisé en ce que** plusieurs points de mesure peuvent être utilsées pour représenter des lignes, des surfaces ou des espaces.

6. Le procédé selon l'une quelconque des revendications précédentes, **caractérisé en ce que** les données d'adresse, tels que le nom, l'adresse de la rue, la ville, le pays et les coordonnées correspondantes de chaque point de mesure sont stockés dans la base de données.

7. Le procédé selon l'une quelconque des revendications précédentes, **caractérisé en ce qu'**une adresse électronique peut être générée pour chaque point de mesure, laquelle, par exemple, consiste en une partie d'une données d'adresse et des coordonnées du point de mesure.

8. Le procédé selon l'une quelconque des revendications précédentes, **caractérisé en ce que** l'on envisage comme information relative au produit et/ou au service, par exemple, des informations touristiques, logistiques, météorologiques, de traffic, relatives à du sauvetage et de la récupération, événementielles et des informations d'achat et de vente ainsi que des cartes électroniques ou similaires.

9. Le procédé selon l'une quelconque des revendications précédentes, **caractérisé en ce que** l'on considère comme information relative au produit et/ou au service, des informations relatives à des produits à données temporelle critiques, des produits ayant des dates de péremption, des produits périssables ou des services à données temporelles critiques.

10. Le procédé de la revendication 8 ou 9, **caractérisé en ce que** les informations relatives au produit et/ou service sont fournis par des fournisseurs ou des fournisseurs d'accès pour les besoins journaliers, tel que par exemple les pharmacies, les boulangeries, les cafés, les drugstores, les commerces de détails, les stands d'alimentation, les restaurants rapides, les auberges, les grossistes, les hôtels, les restaurants et les sociétés d'approvisionnement ou similaires.

11. Le procédé selon l'une quelconque des revendications précédentes, **caractérisé en ce que** les données stockées dans la base de données comprennent des points de mesure et/ou des informations relatives au produit ou/et service sont mises à jour en permanence par les fournisseurs eux-mêmes ou par un fournisseur de service de base de données.

12. Le procédé selon l'une quelconque des revendications précédentes, **caractérisé en ce que** pour l'utilisation des données stockées dans la base de données, un utilisateur utilise un dispositif de transmission et de réception stationnaire et/ou non stationnaire , par exemple un téléphone cellulaire doté d'un équipement de navigation satellite, une montre poignée avec un équipement de navigation satellite, un dispositif de communication et de navigation dans un véhicule à moteur, un PC, un portable, un assistant personnel, un smartphone, ou un dispositif de communication électronique similaire pour l'établissement d'une connexion à cette base de données par un réseau téléphonique conventionnel, radio, internet ou cellulaire, Internet ou similaire.

13. Le procédé selon la revendication 12, **caractérisé en ce que** le client transmets ses demandes et/ou des souhaits à la base de données au moyen du dispositif de transmission et de réception et le client reçoit l'information de produit et/ou de service depuis la base de données, ensemble avec les coordonnées correspondante et/ou les données d'adresse.

14. Le procédé selon la revendication 13, **caractérisé en ce que**, en fonction de ses besoins individuels, le client peut sélectionner au moins un programme d'ordinateur défini depuis un ensemble de programmes d'ordinateurs prédéfini en utilisant le dispositif de transmission et de réception.

15. Le procédé selon la revendication 14, **caractérisé en ce qu'**un programme d'ordinateur défini réalise une optimisation de coût, de routage et temporel.

16. Le procédé de la revendication 14, **caractérisé en ce qu'**un programme d'ordinateur défini peut indiquer des produits désirés en dessous d'un niveau de prix supérieur spécifié par le client, par exemple, des soldes, ou des produits au-dessus d'un niveau de prix inférieur spécifié par le client.

17. Le procédé selon la revendication 14, **caractérisé en ce qu'**un programme d'ordinateur défini peut être utilisé pour fournir l'information désirée relative au produit et/ou service disponible à l'intérieur d'un rayon défini, par exemple depuis la localisation courante du client.

18. Le procédé selon la revendication 14, **caractérisé en ce que** les produits et/ou services désirés dont les prix ont été abaissés peuvent être fournis en utilisant un programme d'ordinateur défini.

19. Le procédé selon la revendication 14, **caractérisé en ce que** l'information de service désirée peut être compilée en fonction d'un type d'événement et la survenance d'une événement en utilisant un programme d'ordinateur défini.

20. Le procédé selon l'une quelconque des revendications précédentes, **caractérisé en ce que** les informations demandées par le client, telle que par exemple les données d'adresse et /ou les coordonnées géographiques et/ou les informations relatives au produit et/ou au service et /ou une carte électronique sont transmises par la base de données et affichées visuellement et /ou transmises acoustiquement par le dispositif de transmission et de réception.

21. Le procédé de la revendication 20, **caractérisé en ce que** le client est guidé vers ou depuis l'emplacement marqué désiré en utilisant un guidage vectoriel sur une carte électronique, par exemple une e-carte, qui est affichée sur le dispositif de transmission et de réception.

22. Le procédé selon la revendication 21, **caractérisé en ce que** l'endroit désiré est indiqué sur la carte électronique au moyen d'un marqueur, par exemple une image miniaturisée d'un marqueur.

23. Le procédé de la revendication 20, **caractérisé en ce que** le client peut être guidé vers ou depuis l'emplacement désiré qui est marqué, par exemple avec un marqueur, en utilisant une information acoustique du dispositif de transmission et de réception.

24. Le procédé selon l'une quelconque des revendications précédentes, **caractérisé en ce que** les produits et / ou services souhaités sont réservés au client par un fournisseur par l'intermédiaire du dispositif émetteur et récepteur.

25. Le procédé de la revendication 24, **caractérisé en ce que** le client obtient du fournisseur un rabais sur l'achat d'un produit ou d'un service réservé .

26. Le procédé selon la revendication 24 ou 25, **caractérisé en ce que** le fournisseur envoie une confirmation de la vente d'un produit ou service à la base de données.
